(19) Europäisches Patentamt
European Patent Office
Office européen des brevets

(11) **EP 3 742 596 B1**

(12) **EUROPEAN PATENT SPECIFICATION**

(45) Date of publication and mention
of the grant of the patent:
**08.05.2024   Bulletin 2024/19**

(21) Application number: **20173175.9**

(22) Date of filing: **06.05.2020**

(51) International Patent Classification (IPC):
**H02M 7/08** (2006.01)          **H02M 5/458** (2006.01)
**H02M 1/12** (2006.01)

(52) Cooperative Patent Classification (CPC):
**H02M 1/12; H02M 5/458; H02M 7/08;** H02M 1/123

(54) **POWER CONVERTER**

STROMWANDLER

CONVERTISSEUR DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2019   GB 201907146**

(43) Date of publication of application:
**25.11.2020   Bulletin 2020/48**

(73) Proprietor: **Rolls-Royce plc
London N1 9FX (GB)**

(72) Inventors:
 • **Lai, Jih-Sheng**
  **Derby DE24 8BJ (GB)**
 • **Venkatesh, Pabbathi**
  **Derby DE24 8BJ (GB)**
 • **Liu, Xiong**
  **Derby DE24 8BJ (GB)**

(74) Representative: **Rolls-Royce plc
Intellectual Property Dept SinA-48
PO Box 31
Derby DE24 8BJ (GB)**

(56) References cited:
FR-A1- 2 896 353          SU-A1- 987 742
US-A1- 2018 287 483

 • RENDUSARA D ET AL: "Design considerations for 12/24-pulse auto-connected rectifiers for large VA, PWM drive systems", APPLIED POWER ELECTRONICS CONFERENCE AND EXPOSITION, 1999. APEC '99. F OURTEENTH ANNUAL DALLAS, TX, USA 14-18 MARCH 1999, PISCATAWAY, NJ, USA,IEEE, US, vol. 2, 14 March 1999 (1999-03-14), pages 903-909, XP010323619, ISBN: 978-0-7803-5160-8
 • SEWAN CHOI ET AL: "Polyphase transformer arrangements with reduced kVA capacities for harmonic current reduction in rectifier type utility interface", POWER ELECTRONICS SPECIALISTS CONFERENCE, 1995. PESC '95 RECORD., 26TH ANNUAL IEEE ATLANTA, GA, USA 18-22 JUNE 1995, NEW YORK, NY, USA,IEEE, US, vol. 1, 18 June 1995 (1995-06-18), pages 353-359, XP010150581, DOI: 10.1109/PESC.1995.474835 ISBN: 978-0-7803-2730-6
 • KIM JONGWAN ET AL: "Analysis of a Shunt Phase-Shift Transformer for Multi-Generator Harmonic Elimination", 2018 IEEE INDUSTRY APPLICATIONS SOCIETY ANNUAL MEETING (IAS), IEEE, 23 September 2018 (2018-09-23), pages 1-16, XP033453763, DOI: 10.1109/IAS.2018.8544556 [retrieved on 2018-11-26]

**Description**

The present disclosure relates to a power converter, and particularly to a multi-phase power converter including a common mode filter.

The mass transportation industry, for example marine and aerospace industries, is moving to more electrical based systems in order to reduce operating costs, emissions, and noise. The adoption of more electrical systems also allows more flexibility in system design and operation.

For integrated power systems, there are prime mover engines which drive a generator and, downstream, an electrical motor driving a propeller or turbine. The power electronics, including an AC/DC/AC (or AC-AC) converter, is connected between the generator and the motor. This is because the AC current as generated by the generator may not be appropriate for the AC-driven motors downstream.

There are different topologies to build a front-end AC/DC converter between the generator and an intermediate DC-link. One distinct requirement for AC/DC converters is the ability to provide good input current waveform quality, especially with respect to suppression of the $5^{th}$ and $7^{th}$ order harmonic currents.

Further, there is generally a need for frequency converters to be provided in the propulsion units. Owing to stricter total harmonic distortion (THD) limitation at the generator terminal, there can be a need for harmonic compensation to be introduced. Typically, this is provided in large current systems through either: phase-shift transformers with passive front end rectifiers; or active front-end (AFE) rectifiers. However, a phase-shift transformer has a bulky low-frequency magnetic core (increasing system size and cost) and AFE rectifiers are costly and less efficient (incurring additional power losses).

Size and cost reduction can be achieved by using a partially rated shunt connected polygon autotransformer with two passive diode rectifiers in order to drive a dual drivetrain system. Such a system might include two generators which are synchronized but phase shifted by 30°.

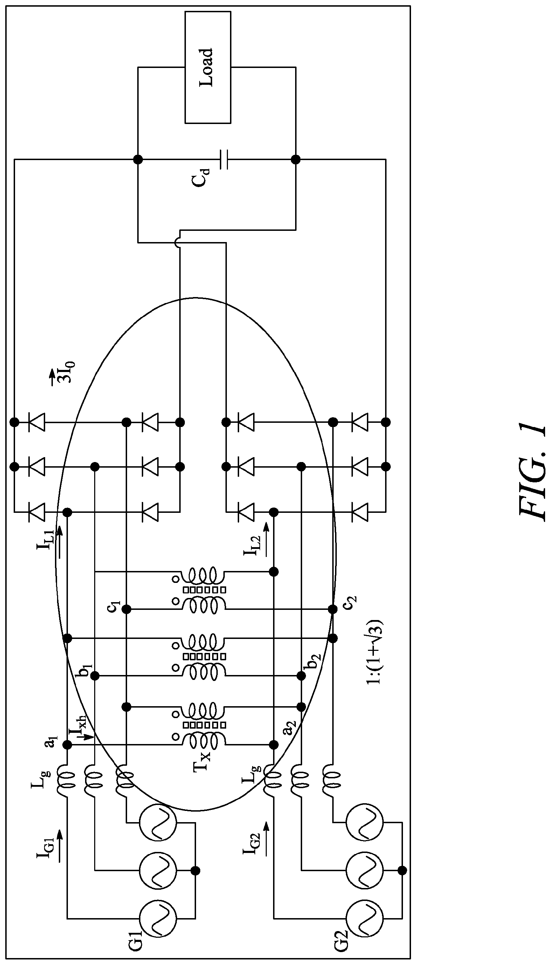

Fig. 1 shows such a system, which is formed of a dual lane multi-phase system connecting two rectifying bridges. Here, dual lane means that there are two discrete multi-phase inputs, one for each generator which connects a respective generator to a respective rectifying bridge. Between the pair of multi-phase inputs is a shunt connected polygon autotransformer. In this configuration, when the DC-link of two rectifying bridges are connected together, there is a zero sequence circulating current $3I_0$ which flows through the transformer, rectifying bridges, and DC-link affecting the transformer harmonic trapping capability.

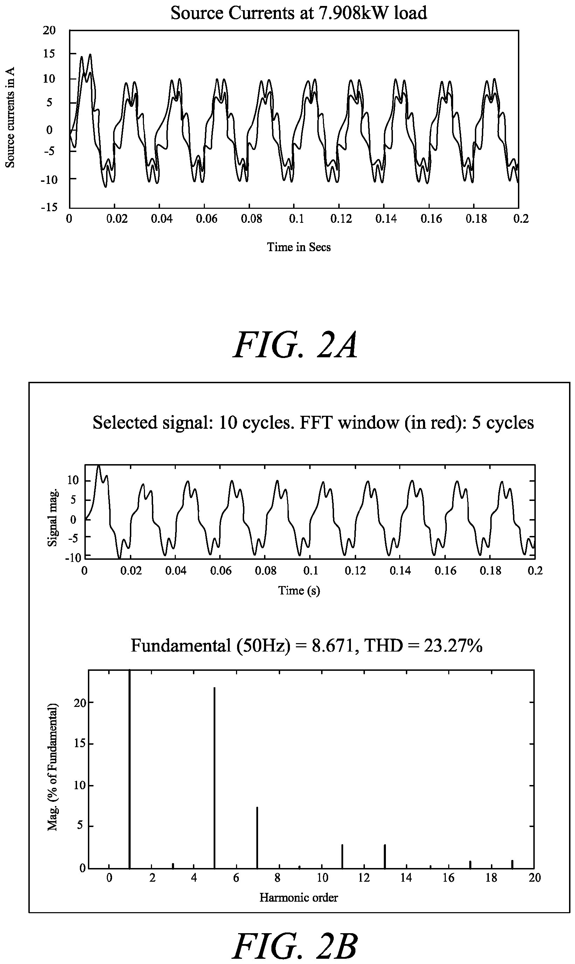

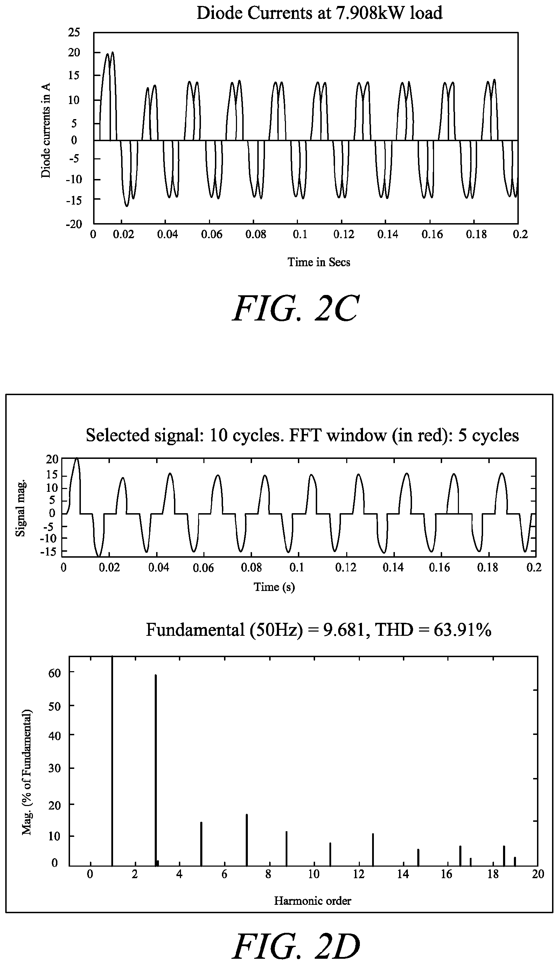

This is shown in Figs. 2A - 2D. In Fig. 2A, the AC power feed currents are shown which are highly distorted due to the harmonic circulating currents. Fig. 2B shows that the total harmonic distortion (THD) of the source current is around 23.2%. Fig. 2C shows the current through the DC rectifying bridges, which is also highly distorted. Similarly, Fig. 2D shows that the THD of the diode current is around 63.9% and it contains substantial amount of $3^{rd}$ order harmonic current.

Accordingly, there is a need to provide a dual lane multi-phase system with a shared DC-link which reduces the effects of circulating currents.

French Patent Application publication FR 2896353 A1 describes a device for rectifying three-phase AC. The device comprises an autotransformer supplied with three-phase voltage and delivers a plurality of three-phase systems. It further comprises rectifying means of three-phase systems. Each system comprises three phases shifted 120 degrees from each other. The rectifying means comprise, specific to each system, a rectifying bridge and smoothing means.

The paper "Design Considerations for 12/24-Pulse Auto-Connected Rectifiers for Large VA, PWM Drive Systems" by D Rendusara et al. (Applied Power Electronics Conference and Exposition, 14-18 March 1999,TX, USA) describes auto-connected multipulse (12/24 pulse) rectifier schemes.

Soviet Union Patent Publication SU 987742 A1 relates to an electrical installation including AC generators, the stator windings of which are connected to DC motors through three-phase rectifiers connected in series or in parallel on the DC side, and a three-phase transformer with star-delta windings.

The paper "Analysis of a Shunt Phase-Shift Transformer for Multi-Generator Harmonic Elimination" by Kim Jongwan et al. (2018 IEEE Industry Applications Society Annual MeetinglEEE, 23 September 2018) discloses a shunt phase-shift transformer rectifier comprising a phase-shift transformer with start-delta windings.

In a first aspect of the disclosure, there is disclosed a power converter, comprising:

two three-phase AC inputs, connectable to respective three-phase AC sources, each three-phase input comprising three rails, each rail configured to receive phase current of the corresponding three-phase AC source;
an AC-DC converter circuit arranged for each of the three-phase AC inputs, each AC-DC converter circuit being configured to rectify a received three-phase current into a DC current; a transformer;
a DC-link, shared between each of the AC-DC converter circuits; and
a load, connected to the DC-link and able to receive DC current therefrom;
wherein the transformer is a polygon autotransformer having first, second and third primary windings and first, second and third secondary windings;
wherein a first rail of a first of the AC inputs is connected to a first rail of a second of the AC inputs by the first primary winding of the transformer and to a third rail of the second AC input by the second secondary winding of the transformer, a second rail of the first AC input is connected to a second rail of the second AC input by the second primary winding of the transformer and to the first rail of the second AC input by the third secondary winding of the transformer, and a third rail of the first AC input is connected to the second rail of the second AC input by the first secondary winding of the transformer and to a third rail of the second AC input by the first primary winding of the transformer;

wherein the first, second and third rails of the first AC input are connected to respective first, second and third inputs of a first of the AC-DC converter circuits, and the first, second and third rails of the second AC input are connected to respective first, second and third inputs of a second of the AC-DC converter circuits; and

wherein the converter further comprises a common mode filter, located within the DC-link, and configured to reduce a circulatory current which, when the power converter is in use, flows from the transformer through one of the AC-DC converter circuits, through the DC-link and through a further of the AC-DC converter circuits back to the transformer.

Advantageously, such a power converter can suppress or reduce the circulatory current in power converters having a shared DC-link between a plurality of AC-DC converters, and therefore the current carrying capacity of the transformer used in such a converter can be reduced. The common mode filter acts in a similar manner to a pair of coupled inductors wound on the same magnetic core, with a strong coupling coefficient. The common mode filter therefore can provide a much higher impedance for common mode, or circulatory, currents whilst also providing minimal (and perhaps even negligible) impedance for differential mode currents.

The power converter may have any one or, to the extent that they are compatible, any combination of the following optional features.

The common mode filter may be positioned across a positive rail and a negative rail of the DC-link.

The load may be an AC load, and the power converter may be an AC-AC converter further comprising an inverter, connected between the DC-link and the AC load, the inverter being configured to provide AC power to the load by converting the DC current in the DC-link.

The common mode filter may comprise two inductive loops of wiring, one formed in a positive rail of the DC-link and one formed in a negative rail of the DC-link. The common mode filter may be formed in a region of the DC-link of a first AC-DC converter circuit or a second AC-DC converter circuit. The common mode filter may also be split into two filters with each connected to the DC-link of the first and second AC-DC converters. In such an example, the two filters may have half the capacity of the common mode filter which is not split into two. The inductive loops of wiring may be mutually coupled. The coupling coefficient $k$ of the two coils may be described as:

$$k = \frac{M}{\sqrt{L_1 \cdot L_2}}$$

where $L_1$ and $L_2$ are self-inductances of the two inductive loops of wiring, and $M$ is the mutual inductance, and wherein $k$ has a value of at least 0.97 and preferably at least 0.99 such that the two inductive loops of wiring are strongly coupled.

The three-phase inputs may be connected to respective multi-phase AC sources. The three-phase AC sources may be respective three-phase generators. The three-phase AC sources may be separate windings from a single generator.

The AC-DC converter circuit may be a six pulse diode rectification circuit.

The power converter may further comprise a capacitor connected between a positive rail and a negative rail of the DC-link.

In a second aspect of the disclosure, there is provided a propulsion system, including the power converter of the first aspect and including any, or any combination insofar as they are compatible, of the optional features as set out therein.

Embodiments will now be described by way of example with reference to the accompanying drawings in which:

Fig. 1 is a circuit schematic illustrating a known dual-lane multi-phase system;

Figs. 2A - 2D are plots illustrating the electrical properties of the multi-phase system of Fig. 1;

Fig. 3 is a circuit schematic illustrating a power converter according to an embodiment; and

Figs. 4A - 4D are plots illustrating the electrical properties of the power converter shown in Fig. 3.

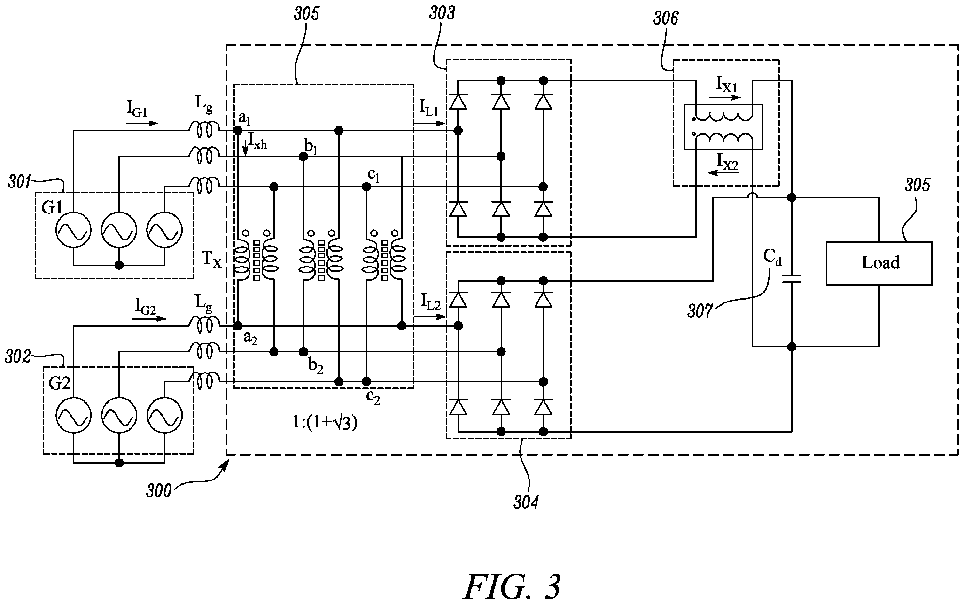

Figure 3 shows a power converter 300. The power converter includes, or is coupled to, two 3-phase AC sources 301 and 302. In this example, the AC sources are synchronized but 30° out of phase. After passing through a respective inductors $L_g$, the phases from each AC source are provided to a multi-phase input. Each multi-phase input is formed of 3 rails, each rail receiving a phase of the multi-phase AC current.

Pairs of rails between multi-phase inputs are connected by terminals of a shunt connected polygon transformer 305. In this example, as there are three phases from each AC source, the polygon transformer is connected to 6 terminals across the multi-phase inputs. The transformer 305 performs a voltage conversion in the standard manner.

The transformer 305 provides two 3-phase terminals, which are each connected to AC-DC converter circuits 303 and 304 and provide respective 3-phase currents. In this example, the AC-DC converter circuits are each provided as respective six-pulse rectifier diode bridges and convert the received multiphase AC currents into DC current. The AC-DC converter circuits 303 and 304 share a DC-link, to which the DC current is provided. A load 305 is connected to the DC link and receives the DC current. The load can include, in some examples, a DC-AC inverter, which provides single or multiphase AC current to, for example, one or more inductors motors.

Located within the DC-link is a common mode filter 306. The common mode filter is positioned across a positive and negative rail of the DC-link, and comprises two inductive loops of wiring. The two resulting inductors are strongly coupled. A capacitor 307 is also provided across the positive and negative rails of the DC-link, and serves to smooth the current rectified by the AC-DC converter circuits 303 and 304.

In use, as has been discussed previously, a common-mode circulating current can be present which flows from the transformer, through one of the AC-DC converter circuits 303 and 304, through the DC-link, and through the other of the AC-DC converter circuits back to the transformer. Of note, is that the common-mode circulating current is defined in part by the current circulating in the same direction on all lines. The common mode filter 306 suppresses this current.

The common mode filter 306 can be understood as two coupled inductors wound on the same magnetic core, with a strong coupling coefficient. The common mode filter acts in series suppressing the common mode currents (i.e. aiding the total inductance) whereas it acts in series eliminating the differential mode inductance.

If $L_1$ and $L_2$ are the self-inductances of the two coils, and $M$ is the mutual inductance, the coupling coefficient can be expressed as:

$$k = \frac{M}{\sqrt{L_1 \cdot L_2}}$$

Considering the first inductor of the common mode filter, the following can be derived:

$$I_1 Z_1 = I_1(R_1 + j\omega L_1) + j\omega M \cdot I_2$$

Similarly, considering the second inductor of the common mode filter, the following can be derived:

$$I_2 Z_2 = I_2(R_2 + j\omega L_2) + j\omega M \cdot I_1$$

Preferably, the common mode filter has a very strong coupling coefficient of almost 1, which results in:

$$L_1 = L_2 = M = L$$

Further, in the common mode current, the current $I_1 = I_2$, and so when neglecting resistance (R), the total impedance in the case of the common mode or circulating current is:

$$Z = Z_1 + Z_2 = L_1 + L_2 + 2M ==> 4L$$

Whereas, in the differential mode current, the current $I_1 = -I_2$, again neglecting resistance the total impedance experienced by differential mode current is:

$$Z = Z_1 + Z_2 = L_1 + L_2 - 2M ==> 0$$

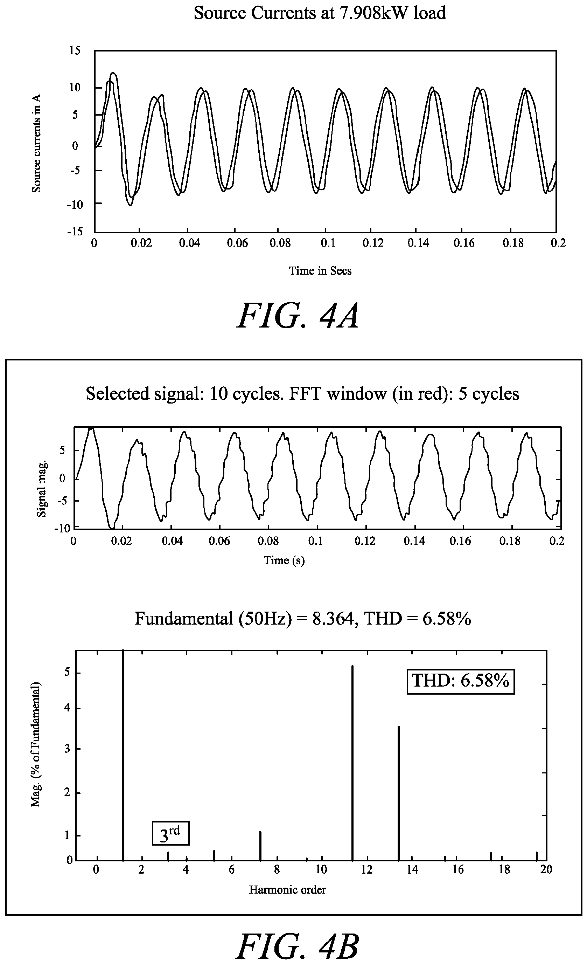

It can be concluded then that the common mode filter offers high impedance for the common mode or circulating currents, whereas it offers zero impedance for differential mode currents. The results of this are shown in Figures 4A - 4D, where the substantial reduction in the third harmonic circulating current can be seen (as compared to the results in Figures 2A - 2D). Indeed, the AC power feed currents shown in Figure 4A, as compared to 2A, show significantly less harmonic oscillation. This is through mitigation of the 5th and 7th harmonics, which is illustrated in Figure 4B. The common mode filter also increases the effectiveness of harmonic mitigation using the shunt connected polygon transformer.

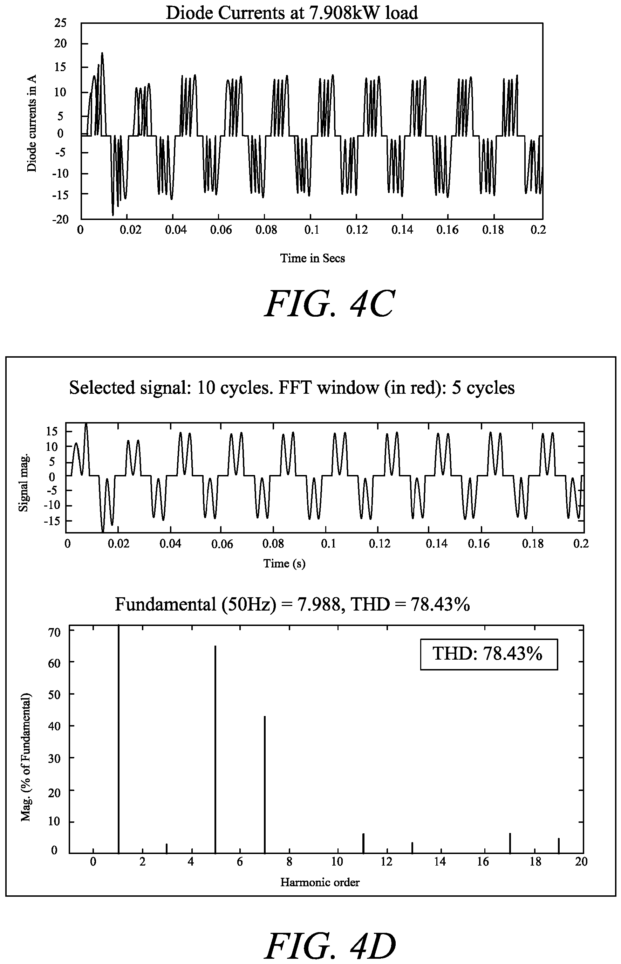

Figure 4C shows the rectifying bridge AC current in the power converter shown in Figure 3. Figure 4B shows the THD analysis of the source current, and Figure 4D shows the THD analysis of the diode rectifier phase current.

While the power converter has been described in conjunction with the exemplary embodiments described above, many equivalent modifications and variations will be apparent to those skilled in the art when given this disclosure. Accordingly, the exemplary embodiments set forth above are considered to be illustrative and not limiting. Various changes to the described embodiments may be made without departing from the scope of the claims.

**Claims**

1. A power converter (300), comprising:

two three-phase AC inputs, connectable to respective three-phase AC sources (301, 302), each three-phase input comprising three rails, each rail configured to receive phase current of the corresponding three-phase AC source; an AC-DC converter circuit (303, 304) arranged for each of the two three-phase AC inputs each AC-DC converter circuit being configured to rectify a received three-phase current into a DC current;

the first, second and third rails of the first AC input are connected to respective first, second and third inputs of a first one of the AC-DC converter circuits, and the first, second and third rails of the second AC input are connected to respective first, second and third inputs of the other one of the AC-DC converter circuits;

a transformer (305) connected to the rails of the three-phase AC inputs, the transformer having first, second and third primary windings and first, second and third secondary windings;

a DC-link, shared between each of the two AC-DC converter circuits; and

a load (305), connected to the DC-link and able to receive DC current therefrom;

**characterized in that:**

the transformer (305) is a polygon autotransformer;

a first rail ($a_1$) of a first of the AC inputs is connected to a first rail ($a_2$) of a second of the AC inputs by the first primary winding of the transformer and to a third rail ($c_2$) of the second AC input by the second secondary winding of the transformer, a second rail ($b_1$) of the first AC input is connected to a second rail ($b_2$) of the second AC input by the second primary winding of the transformer and to the first rail ($a_2$) of the second AC input by the third secondary winding of the transformer, and a third rail ($c_1$) of the first AC input is connected to the second rail ($b_2$) of the second AC input by the first secondary winding of the transformer and to a third rail of the second AC input by the first primary winding of the transformer; and

the power converter (300) further comprises a common mode filter (306), located within the DC-link, and configured to reduce a circulatory current which, when the power converter is in use, flows from the transformer through one of the AC-DC converter circuits, through the DC-link and through a further of the AC-DC converter circuits back to the transformer.

2. The power converter (300) of Claim 1, wherein the common mode filter (306) is positioned across a positive rail and a negative rail of the DC-link.

3. The power converter (300) of Claim 1 or Claim 2, wherein the load (305) is an AC load, and the power converter (300) is an AC-AC converter further comprising an inverter, connected between the DC-link and the AC load, the inverter being configured to provide AC power to the load by converting the DC current in the DC-link.

4. The power converter (300) of any one of the preceding claims, wherein the common mode filter (306) comprises two inductive loops of wiring, one formed in a positive rail of the DC-link and one formed in a negative rail of the DC-link.

5. The power converter (300) of Claim 4, wherein the common mode filter (306) is formed in a region of the DC-link of a first AC-DC converter (303) circuit or a second AC-DC converter circuit (304).

6. The power converter (300) of Claim 4 or Claim 5, wherein the inductive loops of wiring are mutually coupled.

7. The power converter (300) of Claim 6, wherein a coupling coefficient $k$ of the two coils is:

$$k = \frac{M}{\sqrt{L_1 \cdot L_2}}$$

where $L_1$ and $L_2$ are self-inductances of the two inductive loops of wiring, and $M$ is the mutual inductance, and wherein $k$ has a value of at least 0.97 such that the two inductive loops of wiring are strongly coupled.

8. The power converter (300) of any one of the preceding claims, wherein each three-phase input is connectable to a three-phase AC source (301, 302) which is a three-phase generator.

9. The power converter (300) of any one of Claims 1 to 8, wherein each three-phase input is connectable to a three-phase AC source which is a separate winding from a single generator (301, 302).

10. The power converter (300) of any one of the preceding claims, wherein each AC-DC converter circuit (303, 304) is a six pulse diode rectification circuit.

11. The power converter (300) of any one of the preceding claims, further comprising a capacitor (307) connected between a positive rail and a negative rail of the DC-link.

12. A propulsion system, including the power converter (300) of any one of the preceding claims.

**Patentansprüche**

1. Stromwandler (300), umfassend:

zwei dreiphasige AC-Eingänge, die mit jeweiligen dreiphasigen AC-Quellen (301, 302) verbindbar sind, wobei jeder dreiphasige Eingang drei Schienen umfasst, wobei jede Schiene konfiguriert ist, um Phasenstrom der entsprechenden dreiphasigen AC-Quelle zu empfangen;
eine AC-DC-Wandlerschaltung (303, 304), die für jeden der zwei dreiphasigen AC-Eingänge angeordnet ist, wobei jede AC-DC-Wandlerschaltung konfiguriert ist, um einen empfangenen dreiphasigen Strom in einen DC-Strom gleichzurichten;
die erste, zweite und dritte Schiene des ersten AC-Eingangs mit jeweiligen ersten, zweiten und dritten Eingängen von einer ersten der AC-DC-Wandlerschaltungen verbunden sind, und die erste, zweite und dritte Schiene des zweiten AC-Eingangs mit jeweiligen ersten, zweiten und dritten Eingängen der anderen von den AC-DC-Wandlerschaltungen verbunden sind,
einen Transformator (305), der mit den Schienen der dreiphasigen AC-Eingänge verbunden ist, wobei der Transformator erste, zweite und dritte Primärwicklungen und erste, zweite und dritte Sekundärwicklungen aufweist,
einen DC-Zwischenkreis, der zwischen jeder von den zwei AC-DC-Wandlerschaltungen geteilt wird; und
eine Last (305), die mit dem DC-Zwischenkreis verbunden und in der Lage ist, DC-Strom davon zu empfangen;
**dadurch gekennzeichnet, dass:**

der Transformator (305) ein Polygonspartransformator ist,
eine erste Schiene ($a_1$) eines ersten der AC-Eingänge mit einer ersten Schiene ($a_2$) eines zweiten der AC-Eingänge durch die erste Primärwicklung des Transformators und mit einer dritten Schiene ($c_2$) des zweiten AC-Eingangs durch die zweite Sekundärwicklung des Transformators verbunden ist, eine zweite Schiene ($b_1$) des ersten AC-Eingangs mit einer zweiten Schiene ($b_2$) des zweiten AC-Eingangs durch die zweite Primärwicklung des Transformators und mit der ersten Schiene ($a_2$) des zweiten AC-Eingangs durch die dritte Sekundärwicklung des Transformators verbunden ist und eine dritte Schiene ($c_1$) des ersten AC-Eingangs mit der zweiten Schiene ($b_2$) des zweiten AC-Eingangs durch die erste Sekundärwicklung des Transformators und mit einer dritten Schiene des zweiten AC-Eingangs durch die erste Primärwicklung des Transformators verbunden ist, und
der Stromwandler (300) ferner einen Gleichtaktfilter (306) umfasst, der sich innerhalb des DC-Zwischenkreises befindet und konfiguriert ist, um einen Kreisstrom zu reduzieren, der, wenn der Stromwandler in Verwendung ist, von dem Transformator durch eine der AC-DC-Wandlerschaltungen, durch den DC-Zwischenkreis und durch eine weitere der AC-DC-Wandlerschaltungen zurück zu dem Transformator fließt.

2. Stromwandler (300) nach Anspruch 1, wobei der Gleichtaktfilter (306) über eine positive Schiene und eine negative Schiene des DC-Zwischenkreises positioniert ist.

3. Stromwandler (300) nach Anspruch 1 oder Anspruch 2, wobei die Last (305) eine AC-Last ist und der Stromwandler (300) ein AC-AC-Wandler ist, ferner umfassend einen Wechselrichter, der zwischen dem DC-Zwischenkreis und der AC-Last verbunden ist, wobei der Wechselrichter konfiguriert ist, um der Last AC-Leistung bereitzustellen, indem der DC-Strom in dem DC-Zwischenkreis umgewandelt wird.

4. Stromwandler (300) nach einem der vorhergehenden Ansprüche, wobei der Gleichtaktfilter (306) zwei Verdrahtungsinduktionsschleifen umfasst, eine in einer positiven Schiene des DC-Zwischenkreises gebildet und eine in einer negativen Schiene des DC-Zwischenkreises gebildet.

5. Stromwandler (300) nach Anspruch 4, wobei der Gleichtaktfilter (306) in einer Region des DC-Zwischenkreises einer ersten AC-DC-Wandlerschaltung (303) oder einer zweiten AC-DC-Wandlerschaltung (304) gebildet ist.

6. Stromwandler (300) nach Anspruch 4 oder Anspruch 5, wobei die Verdrahtungsinduktionsschleifen gegenseitig gekoppelt sind.

7. Stromwandler (300) nach Anspruch 6, wobei ein Kopplungskoeffizient $k$ der zwei Spulen wie folgt ist:

$$k = \frac{M}{\sqrt{L_1 \cdot L_2}}$$

wobei $L_1$ und $L_2$ Selbstinduktivitäten der zwei Verdrahtungsinduktionsschleifen sind und $M$ die gegenseitige Induktivität ist und wobei $k$ einen Wert von zumindest 0,97 aufweist, sodass die zwei Verdrahtungsinduktionsschleifen stark gekoppelt sind.

8. Stromwandler (300) nach einem der vorhergehenden Ansprüche, wobei jeder dreiphasige Eingang mit einer dreiphasigen AC-Quelle (301, 302) verbindbar ist, die ein dreiphasiger Generator ist.

**9.** Stromwandler (300) nach einem der Ansprüche 1 bis 8, wobei jeder dreiphasige Eingang mit einer dreiphasigen AC-Quelle verbindbar ist, die eine separate Wicklung von einem einzelnen Generator (301, 302) ist.

**10.** Stromwandler (300) nach einem der vorhergehenden Ansprüche, wobei jede AC-DC-Wandlerschaltung (303, 304) eine Sechs-Impuls-Diodengleichrichterschaltung ist.

**11.** Stromwandler (300) nach einem der vorhergehenden Ansprüche, ferner umfassend einen Kondensator (307), der zwischen einer positiven Schiene und einer negativen Schiene des DC-Zwischenkreises verbunden ist.

**12.** Antriebssystem, beinhaltend den Stromwandler (300) nach einem der vorhergehenden Ansprüche.

## Revendications

**1.** Convertisseur de puissance (300), comprenant :

deux entrées CA triphasées, pouvant être connectées à des sources CA triphasées respectives (301, 302), chaque entrée triphasée comprenant trois rails, chaque rail étant configuré pour recevoir un courant de phase de la source CA triphasée correspondante ;
un circuit convertisseur CA-CC (303, 304) agencé pour chacune des deux entrées CA triphasées, chaque circuit convertisseur CA-CC étant configuré pour redresser un courant triphasé reçu en un courant CC ;
les premier, deuxième et troisième rails de la première entrée CA sont connectés à des première, deuxième et troisième entrées respectives d'un premier des circuits convertisseurs CA-CC, et les premier, deuxième et troisième rails de la seconde entrée CA sont connectés à des première, deuxième et troisième entrées respectives de l'autre des circuits convertisseurs CA-CC ;
un transformateur (305) connecté aux rails des entrées CA triphasées, le transformateur comportant des premier, deuxième et troisième enroulements primaires et des premier, deuxième et troisième enroulements secondaires ;
une liaison CC, partagée entre chacun des deux circuits convertisseurs CA-CC ; et
une charge (305), connectée à la liaison CC et capable de recevoir un courant CC en provenance de celle-ci ;
**caractérisé en ce que** :

le transformateur (305) est un autotransformateur polygonal ;
un premier rail ($a_1$) d'une première des entrées CA est connecté à un premier rail ($a_2$) d'une seconde des entrées CA par le premier enroulement primaire du transformateur et à un troisième rail ($c_2$) de la seconde entrée CA par le deuxième enroulement secondaire du transformateur, un deuxième rail ($b_1$) de la première entrée CA est connecté à un deuxième rail ($b_2$) de la seconde entrée CA par le deuxième enroulement primaire du transformateur et au premier rail ($a_2$) de la seconde entrée CA par le troisième enroulement secondaire du transformateur, et un troisième rail ($c_1$) de la première entrée CA est connecté au deuxième rail ($b_2$) de la seconde entrée CA par le premier enroulement secondaire du transformateur et à un troisième rail de la seconde entrée CA par le premier enroulement primaire du transformateur ; et
le convertisseur de puissance (300) comprend en outre un filtre de mode commun (306), situé à l'intérieur de la liaison CC, et configuré pour réduire un courant circulatoire qui, lorsque le convertisseur de puissance est en cours d'utilisation, circule à partir du transformateur via l'un des circuits de convertisseur CA-CC, via la liaison CC et via un autre circuit de convertisseur CA-CC pour revenir au transformateur.

**2.** Convertisseur de puissance (300) selon la revendication 1, dans lequel le filtre de mode commun (306) est positionné entre un rail positif et un rail négatif de la liaison CC.

**3.** Convertisseur de puissance (300) selon la revendication 1 ou la revendication 2, dans lequel la charge (305) est une charge CA, et le convertisseur de puissance (300) est un convertisseur CA-CA comprenant en outre un onduleur, connecté entre la liaison CC et la charge CA, l'onduleur étant configuré pour fournir une puissance CA à la charge en convertissant le courant CC dans la liaison CC.

**4.** Convertisseur de puissance (300) selon l'une quelconque des revendications précédentes, dans lequel le filtre de mode commun (306) comprend deux boucles inductives de câblage, une formée dans un rail positif de la liaison CC et une formée dans un rail négatif de la liaison CC.

**5.** Convertisseur de puissance (300) selon la revendication 4, dans lequel le filtre de mode commun (306) est formé dans une région de la liaison CC d'un premier circuit convertisseur CA-CC (303) ou d'un deuxième circuit convertisseur CA-CC (304).

**6.** Convertisseur de puissance (300) selon la revendication 4 ou la revendication 5, dans lequel les boucles inductives de câblage sont mutuellement couplées.

**7.** Convertisseur de puissance (300) selon la revendication 6, dans lequel un coefficient de couplage $k$ des deux bobines est :

$$k = \frac{M}{\sqrt{L_1 \cdot L_2}}$$

où $L_1$ et $L_2$ sont les auto-inductances des deux boucles inductives de câblage, et $M$ est l'inductance mutuelle, et où $k$ comporte une valeur d'au moins 0,97 de telle sorte que les deux boucles inductives de câblage soient fortement couplées.

**8.** Convertisseur de puissance (300) selon l'une quelconque des revendications précédentes, dans lequel chaque entrée triphasée peut être connectée à une source CA triphasée (301, 302) qui est un générateur triphasé.

**9.** Convertisseur de puissance (300) selon l'une quelconque des revendications 1 à 8, dans lequel chaque entrée triphasée peut être connectée à une source CA triphasée qui est un enroulement séparé d'un générateur unique (301, 302).

**10.** Convertisseur de puissance (300) selon l'une quelconque des revendications précédentes, dans lequel chaque circuit convertisseur CA-CC (303, 304) est un circuit de redressement à diodes à six impulsions.

**11.** Convertisseur de puissance (300) selon l'une quelconque des revendications précédentes, comprenant en outre un condensateur (307) connecté entre un rail positif et un rail négatif de la liaison CC.

**12.** Système de propulsion, comprenant le convertisseur de puissance (300) selon l'une quelconque des revendications précédentes.

*FIG. 1*

Source Currents at 7.908kW load

## FIG. 2A

Selected signal: 10 cycles. FFT window (in red): 5 cycles

Fundamental (50Hz) = 8.671, THD = 23.27%

## FIG. 2B

Diode Currents at 7.908kW load

## FIG. 2C

Selected signal: 10 cycles. FFT window (in red): 5 cycles

Fundamental (50Hz) = 9.681, THD = 63.91%

## FIG. 2D

*FIG. 3*

## Source Currents at 7.908kW load

*FIG. 4A*

*FIG. 4B*

Diode Currents at 7.908kW load

*FIG. 4C*

Selected signal: 10 cycles. FFT window (in red): 5 cycles

Fundamental (50Hz) = 7.988, THD = 78.43%

*FIG. 4D*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2896353 A1


**Non-patent literature cited in the description**

- **D RENDUSARA et al.** Design Considerations for 12/24-Pulse Auto-Connected Rectifiers for Large VA, PWM Drive Systems. *Applied Power Electronics Conference and Exposition,* 14 March 1999

- **KIM JONGWAN et al.** Analysis of a Shunt Phase-Shift Transformer for Multi-Generator Harmonic Elimination. *2018 IEEE Industry Applications Society Annual MeetingIEEE,* 23 September 2018